Europäisches Patentamt

European Patent Office

Office européen des brevets

(11) Publication number: **0 092 831**
A2

## (12) EUROPEAN PATENT APPLICATION

(21) Application number: 83104040.7

(22) Date of filing: 25.04.83

(51) Int. Cl.³: **G 01 C 19/64**
**G 02 F 1/21**

(30) Priority: 28.04.82 JP 72275/82
11.06.82 JP 100975/82
17.06.82 JP 104894/82

(43) Date of publication of application:
02.11.83 Bulletin 83/44

(84) Designated Contracting States:
DE FR GB NL SE

(71) Applicant: SUMITOMO ELECTRIC INDUSTRIES
LIMITED
No. 15, Kitahama 5-chome Higashi-ku
Osaka-shi Osaka(JP)

(72) Inventor: Yoshida, Kenichi c/o Sumitomo Electric
Industries, Ltd. Osaka Works 1-3, Shimaya 1-chome
Konohana-ku Osaka-shi Osaka(JP)

(72) Inventor: Ono, Kimizo c/o Sumitomo Electric
Industries, Ltd. Osaka Works 1-3, Shimaya 1-chome
Konohana-ku Osaka-shi Osaka(JP)

(72) Inventor: Yokohara, Takashi c/o Sumitomo Electric
Industries, Ltd. Osaka Works 1-3, Shimaya 1-chome
Konohana-ku Osaka-shi Osaka(JP)

(72) Inventor: Nishiwaki, Yoshikazu c/o Sumitomo Electric
Industries, Ltd. Osaka Works 1-3, Shimaya 1-chome
Konohana-ku Osaka-shi Osaka(JP)

(72) Inventor: Tsuno, Koichi c/o Sumitomo Electric
Industries, Ltd. Osaka Works 1-3, Shimaya 1-chome
Konohana-ku Osaka-shi Osaka(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Optical fiber gyro.

(57) An optical fiber gyro is improved by providing the
various optical elements on a single substrate. Optical
wave-guides are formed on the substrate by providing
diffusion regions, and light branching means for dividing a
laser light beam may take the form of a grating, a directional
coupler, etc. The light source is typically a laser device
bonded to the substrate and the light receiver a photodiode.
These elements may be made monolithically with the
substrate when the latter is a compound semiconductor such
as, e.g. GaAs. If desired, one of the wave-guides may be
associated with a phase shifter or modulator for detection
purposes.

*FIG. I*

PATENTANWÄLTE
GRÜNECKER · DR. KINKELDEY · DR. STOCKMAIR
DR. SCHUMANN · JAKOB · DR. BEZOLD · MEISTER
HILGERS · DR. MEYER-PLATH
MAXIMILIANSTR. 58 · 8000 MÜNCHEN 22

## OPTICAL FIBER GYRO

## BACKGROUND OF THE INVENTION

This invention relates to an integrated optical fiber gyro.

An optical fiber gyro for detecting rotational speed, utilizing the Sagnac effect, has various merits. More specifically, the optical fiber gyro is rigid against acceleration because it has no movable parts. Furthermore, it is high in sensitivity, excellent in linearity, simple in construction and low in power consumption. However, it has not been put in practical use.

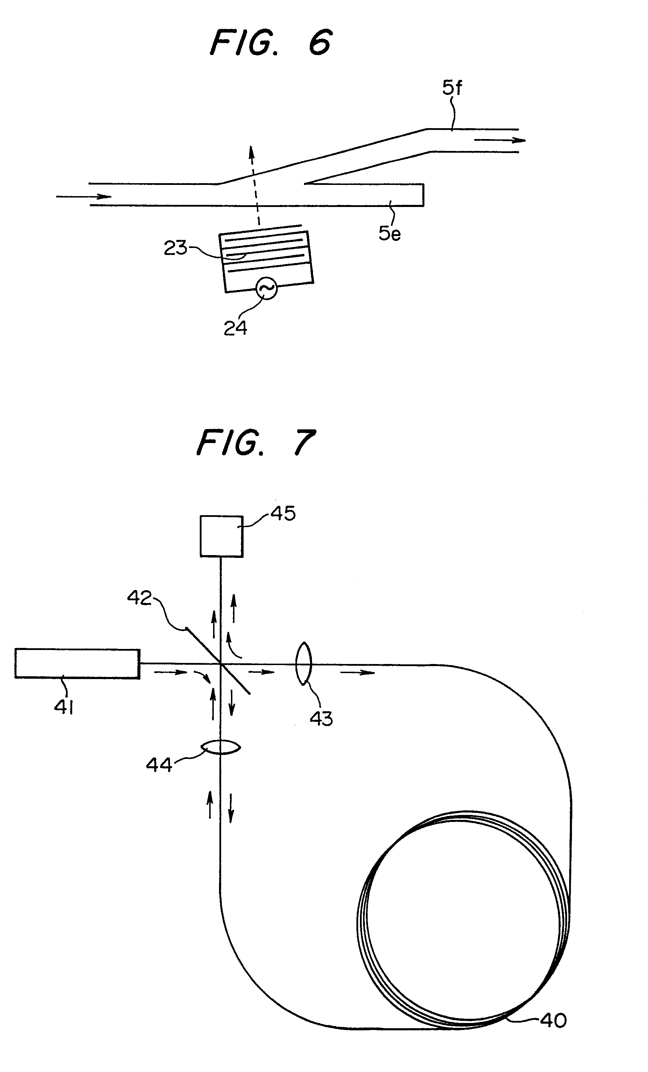

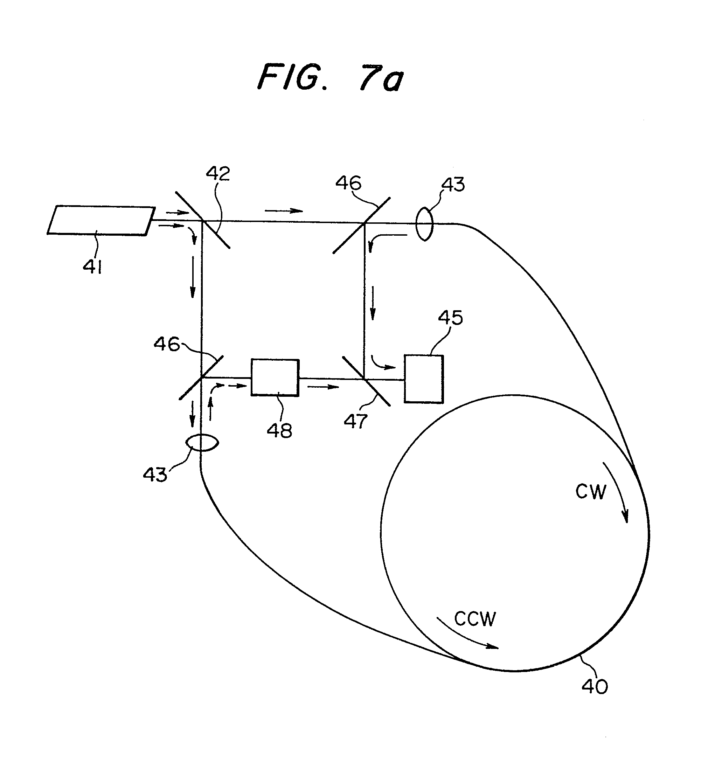

Figure 7 is a plan view showing the arrangement of a conventional optical fiber gyro.

As shown in Fig. 7, a single mode optical fiber 40 is wound several turns to form an optical fiber loop. Reference numeral 41 designates a laser. The laser beam is divided into two light beams by a half-mirror 42. One of the two light beams is applied through a lens 43 to one end of the optical fiber 40, thus passing through the latter clockwise (hereinafter referred to as "the clockwise (or CL) beam"), and the other is applied through a lens 44 to the other end of the optical fiber loop, thus passing through the latter counterclockwise (hereinafter referred to as "the counterclockwise (or CCL) beam"). The two light beams passed through the optical fiber loop are then put together by the half-mirror 42 in a manner such that the optical axes thereof coincide.

The optical path of the clockwise light beam is equal in length to that of the counterclockwise beam.

When the gyro is turned about a normal to the optical fiber loop at an angular velocity $\Omega$, the phase difference $\Delta\theta$ between the two light beams is:

$$\Delta\theta = \frac{4\pi La}{c\lambda} \Omega \qquad\qquad (1)$$

where L is the length of the optical fiber, a is the radius of the optical fiber, $\lambda$ is the wavelength of the laser beam, and c is the light velocity.

The photo-detector 45 provides an output proportional to the square of the sum of the clockwise light beam and the counterclockwise light beam. If the two light beams are equal in amplitude, then the output of the photo-detector is proportional to $(1 + \cos \Delta\theta)$, as explained hereafter.

Ideally, the amplitude of the clockwise light beam is equal to that of the counterclociwise light beam. The waves of the clockwise and counterclockwise light beams are represented by the following expressions (2) and (3), respectively:

$$E_0 \, e^{i(\omega t + \Delta\theta/2)} \tag{2}$$

$$E_0 \, e^{i(\omega t - \Delta\theta/2)} \tag{3}$$

where $\omega$ is the light angular frequency.

The output of the photo-detector, being equal to the square of the sum of both, is:

$$I_1(t) \propto E_0^{\,2}(1 + \cos \Delta\theta) \tag{4}$$

The output includes a term in cos $\Delta\theta$. When $\Delta\theta$ is small, the variation of the component cos $\Delta\theta$ is extremely small. That is, when $\Delta\theta$ is small, the sensitivity is low.

Accordingly, it should be included, in the form of sin $\Delta\theta$, in the output. An optical output in such a functional form can be obtained by employing an method in which two light beams are separated and one of the two light beams is shifted by $\pi/2$ in phase.

Figure 7 is a plan view showing a conventional optical fiber gyro of this type.

Similarly as in Fig. 7, a light beam from a laser 41 is divided into two light beams by a beam splitter 42, and the two light beams are applied through condenser lenses 43 to both ends of a single mode optical fiber loop 40.

The aforementioned beam splitter 42 and three additional beam splitters 46, 46 and 47 are arranged at the four corners of a square. The clockwise (CW) light beam passes along two opposed sides of the square, and the counterclockwise (CCW) light beam passes along the remaining two opposed sides. That is, the optical path for the CW light beam is separated from that for the CCW light beam. A phase shifter is inserted in one of the optical paths to shift the phase of the laser beam by $\pi/2$.

The shifted wave can be represented by the following expression (5) instead of (3):

$$E_0 e^{i(\omega t + \pi/2 - \Delta\theta/2)} \tag{5}$$

Expression (2) is added to expression (5), and the result of addition is squared, so that the output $I_2(t)$ of photo-detector 45 is provided:

$$I_2(t) \propto E_0^2 (1 + \sin \Delta\theta) \tag{6}$$

In the optical systems of Figs. 7 and 7a, the laser, the photo-detector and the half-mirrors are made up of ordinary optical components.

Since the optical fiber gyro must have excellent vibration resistance, the optical components are fixed on a large, heavy bench by means of magnet stands. Accordingly, the optical fiber gyro is bulky, heavy and incovenient to handle as a whole, thus not being practical. Furthermore, the optical fiber gyro is disadvantageous in that it is rather difficult to adjust the optical axes, which are liable to shift.

When the relative position of the laser, beam splitter, condenser lens and optical fiber varies, the coupling efficiency of the optical fiber is varied, and the output of the photo-detector drifts accordingly.

For the same reason, the overlapping part of the clockwise and counterclockwise light beams is changed in area on the photo-detector, and accordingly the output of the photo-detector drifts, making measurement unreliable.

Even when a system of detecting $(1 + \sin \Delta\theta)$ is employed, the output drift due to the instability of the optical system cannot be distinguished from the variation of the phase difference $\Delta\theta$, because the DC component of the photo-detector output is observed. The drift results in the occurrence of an error in the measurement of $\Delta\theta$.

It is rather difficult to manufacture and assemble the conventional optical fiber gyro.

In the conventional optical fiber gyro, the optical system is made up of discrete optical components. Accordingly, it is difficult to adjust the optical axis during assembly.

It is also difficult to adjust the angle of the phase shifter. With the phase shifter in the conventional optical fiber gyro, the parallel glass plate is inclined to adjust the substantial thickness in the optical path direction, thereby to obtain the desired phase difference $\pi/2$. However, since the optical wavelength is extremely short, it is considerably difficult ot obtain the phase difference $\pi/2$ with high accuracy. Thus, when the glass plate is inclined, the output of the photo-detector drifts.

## SUMMARY OF THE INVENTION

Accordingly, one object of this invention is to provide an optical fiber gyro eliminating the above problems, in one embodiment of which a laser diode, a photo-diode, gratings and a modulating element are provided on one substrate, to modulate one light beam, whereby the S/N ratio may be improved.

Three modulation methods, namely, amplitude modulation, phase modulation and frequency shift modulation are available, and any one of these modulation methods may be employed in the invention.

In an optical fiber gyro according to further embodiments, optical wave-guides and a light branching element or elements are formed on one substrate by a photolithographic technique, and the light emitting element and the light receiving element are integral with the substrate.

In a further fiber gyro of the invention, optical wave-guides, light branching elememts, a phase shifter, etc. are formed on one substrate having an electro-optic effect by photolithography, and a light emitting element and a light receiving element are bonded to the end faces of the substrate or formed on the substrate, so that the optical systems are provided in monolithic form.

## BRIEF DESCRIPTION OF THE DRAWINGS

Fig. 1 is a perspective view of the substrate of an optical fiber gyro and its relevent components according to a first embodiment of this invention;

Fig. 2 is a perspective view of the substrate of an optical fiber gyro and its relevent components according to a second embodiment of the invention;

Fig. 3 is an enlarged plan view of a directional coupler type amplitude modulator of the gyro in Fig. 2;

Fig. 4 is an enlarged plan view of a Mach-Zehnder interferometer type amplitude modulator of the gyro in Fig. 1;

Fig. 5 is a plan view outlining an optical fiber gyro using a phase modulator;

Fig. 6 is a plane view outlining an optical fiber gyro in which a surface acoustic wave transducer is set near an optical wave-guide in order to shift the frequency;

Fig. 7 is a plan view of a conventional optical fiber gyro fabricated by combining individual optical elements;

Fig. 7a is an explanatory diagram showing the optical system of another conventional gyro using a phase shifter;

Fig. 8 is a perspective view of an optical fiber gyro according to another embodiment on this invention, in which the light branching element is a diffraction grating;

Fig. 9 is a perspective view of an optical fiber gyro according to an embodiment of the invention which employs directional coupler type light branching elements;

Fig. 10 is a perspective view of an optical fiber gyro according to an embodiment of the invention which employs Y-shaped branching paths;

Fig. 11 is a perspective view of an optical fiber gyro according to an embodiment of the invention in which the optical systems are all monolithically provided on a GaAs single crystal substrate;

Fig. 12 is a plan view showing the arrangement of another example of an optical fiber gyro according to this invention;

Fig. 13 is a perspective view showing a still further example of the optical fiber gyro according to the invention, in which optical elements are formed on one and the same substrate;

Fig. 14 is a plan view outlining a light branching element provided according to a Y-shaped branching system; and

Fig. 15 is a plan view outlining a light branching element provided according to an evanescent coupling system.

DETAILED DESCRIPTION OF THE PREFERRED EMBODIMENTS

This invention will now be described with reference to preferred embodiments thereof.

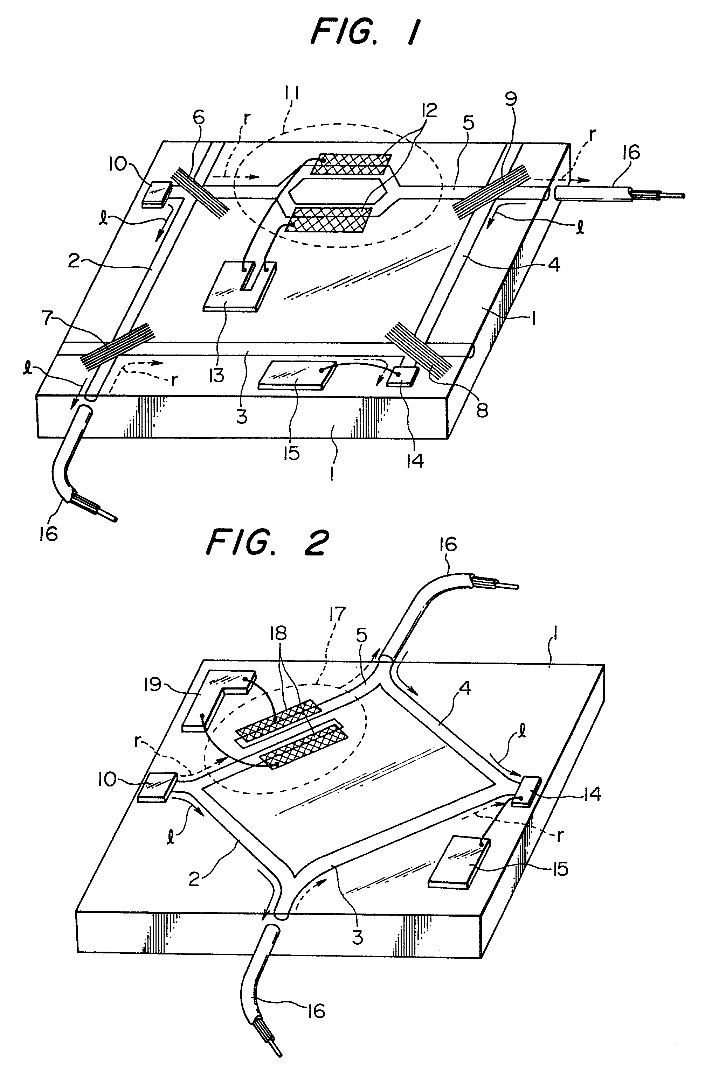

Fig. 1 is a perspective view of the substrate of an optical fiber gyro according to a first embodiment of the invention.

The substrate 1 has electro-optic effects, and is formed of a crystal of GaAs, InP, $LiNbO_3$, $Bi_{12}SiO_{20}$ or $Bi_{12}GeO_{20}$, etc.

Optical wave-guides 2, 3, 4 and 5 are formed on the substrate 1 in a manner such that they cross one another as shown in Fig. 1.

A grating 6 serving as a half-mirror is provided at the intersection of the two optical wave-guides 2 and 5 such that it extends in the direction of the bisector of the angle formed by the two optical wave-guides 2 and 5. Similarly, gratings 7, 8 and 9 serving as half-mirrors are provided at the intersections of the optical wave-guides 2 and 3, 3 and 4, and 4 and 5, respectively. Each grating, having a number of parallel lines arranged at equal intervals, can diffract a light beam of a predetermined wavelength. In this embodiment, each grating operates to bend a light beam from one optical wave-guide to another.

A laser diode 10 in the form of a chip is bonded to the "starting" end of the optical wave-guide 5.  The light beam from the laser diode 10 is divided into a clockwise light beam r and a counterclockwise light beam l. The optical wave-guide 5, in which the clockwise light beam r propagates, is partially deformed, or branches partially,  to form a modulator 11 for light amplitude modulation.

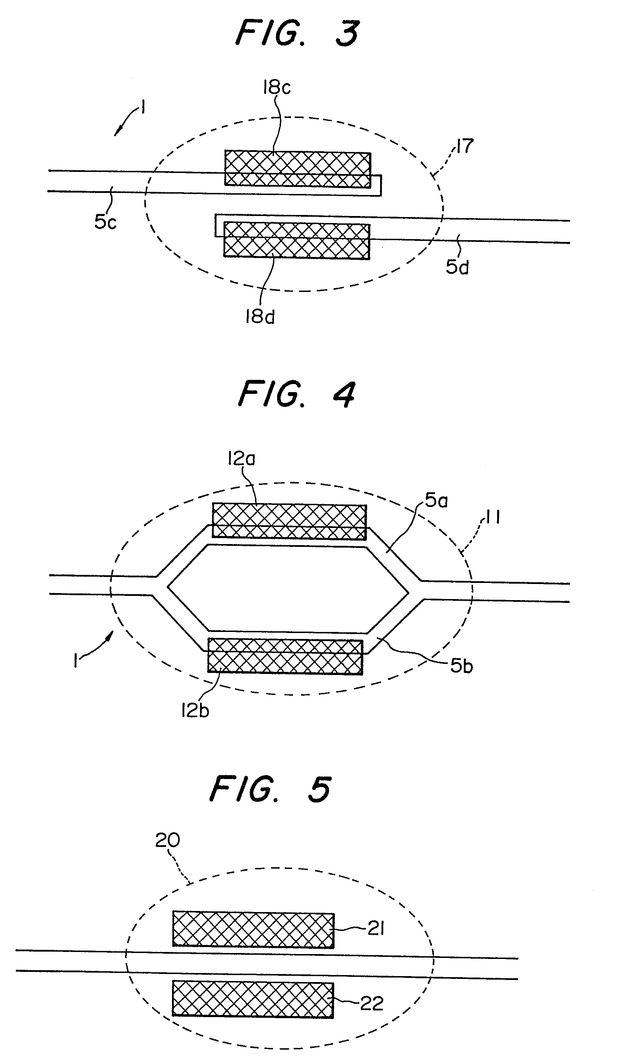

Fig. 4 is an enlarged plan view of the modulator. The optical wave-guide 5 branches into optical wave-guides 5a and 5b on which electrodes 12a and 12b are provided by vacuum-evaporation, printing or other methods.  A modulation signal generating IC (integrated circuit) 13 (Fig. 1) is fixedly secured to the substrate.  The IC 13 operates to apply a voltage to the electrodes 12a and 12b, to thereby change the refractive indexes of the optical wave-guides 5a and 5b by the electro-optic effect.

In each of the optical wave-guides 5a and 5b, the light  velocity is inversely proportional to the refractive index.  Accordingly, when different electric fields are applied to the optical wave-guides 5a and 5b, the light  velocity in the optical wave-guide  5a is different  from that in the optical wave-guide 5b.  The two optical wave-guides 5a and 5b are thereafter joined into one optical wave-guide; however, the light beam passed through the former is different in phase from that passed through the latter. Accordingly, the amplitude of the combined light beams is not the simple sum of the amplitudes of the light beams from the two optical wave-guides 5a and 5b. In the ideal case, the amplitude of the combined light beams is a function including the cosine of the phase difference $\phi$.

Accordingly, if the voltages applied to the two electrodes 12a and 12b are changed periodically so as to periodically change the phase difference $\phi$, then the amplitude of the light beams passed through the optical wave-guide branches 5a and 5b are periodically changed.

The optical wave-guide branches 5a and 5b form a Mach-Zehner interferometer.

The clockwise light beam is subjected to amplitude-modulation by the modulator 11 as described. An optical element for applying an alternating electric field to optical wave-guide branches to perform such amplitude-modulation is well known in the art.

The counterclockwise light beam is not amplitude-modulated.

A photo-diode 14 is bonded to one end of the optical wave-guide 4, which is close to the intersection of the optical wave-guides 4 and 3. The output of the photo-diode 14 is amplified and suitably processed by a detection signal processing IC 15.

The clockwise light beam r, after being modulated while passing through the optical wave-guide 5, enters an optical fiber 16. The optical fiber 16 is wound several turns to form an optical fiber loop (in Fig. 1, the loop is not shown).

After passing through the optical fiber loop 16, the clockwise light beam r is returned into the optical wave-guide 2 and is then bent by the grating 7, to pass into the optical wave-guide 3. The light beam r is further bent by the grating 8, to reach the photo-diode 14. The counterclockwise light beam l which is provided by the grating 6 is applied through the optical wave-guide 2 to the optical fiber loop 16. The counterclockwise light beam l, after passing through the optical fiber loop 16 counterclockwise, reaches the end of the optical wave-guide 5, and is then bent from the optical wave-guide 5 into the optical wave-guide 4 by the grating 9, to reach the photo-diode 14.

The photo-diode receives the clockwise beam r and the counterclockwise beam l simultaneously. One of the two light beams r and l has been subjected to amplitude-modulation.

When the fiber loop turns at an angular velocity $\Omega$, a phase difference $\Delta\theta$ is provided between the light beams r and l.

The output of the photo-diode includes an electrical signal having an angular frequency equal to the modulation angular frequency $\omega m$. The amplitude of the signal includes the phase difference $\Delta\theta$. Accordingly, the phase difference $\Delta\theta$ can be obtained by detecting the amplitude.

This function will be described in more detail.

When the clockwise beam and the counterclockwise beam come out of the optical wave-guides 5 and 2, respectively, they can be represented by the following expressions:

(clockwise)           $(1 + a \sin \omega m\ t)\ e^{i\omega t}$

(counterclockwise)          $e^{i\omega t}$

where $\omega$ is the angular frequency of the laser beam, and $\omega m$ is the modulation angular frequency of the modulator 11.

It is assumed that, when the clockwise light beam and the counterclockwise light beam pass through the optical fiber loop respectively clockwise and counterclockwise, the former light beam leads by $\Delta\theta/2$ in phase and the latter light beam lags by $\Delta\theta/2$ in phase. As is clear from expression (1), the phase difference $\Delta\theta$ is proportional to the angular velocity $\Omega$ of the fiber loop.

Therefore, then the light beams r and l enter the photo-diode, they can be represented by the following

functional expressions:

$$\text{(clockwise)} \qquad E_r (1 + a \sin \omega m \, t) \, e^{i(\omega t + \Delta\theta/2)}$$

$$\text{(counterclockwise)} \qquad E_r \, e^{i(\omega t - \Delta\theta/2)}$$

The photo-diode performs square-law detection. Therefore, the square of the sum of both input signals is the value of the electrical signal output by the photo-diode. Thus, the output electrical signal I is:

$$I = E_1^2 + E_r^2 (1 + a \sin \omega m \, t)^2$$
$$+ 2 E_r E_1 \cos \Delta\theta (1 + \sin \omega m \, t) \qquad (7)$$

That is, the output electrical signal includes DC components, $\omega m$ components and $2\omega m$ components.

The $\omega m$ components in the output electrical signal can be obtained by generating an electrical signal having an angular frequency $\omega m$ as a reference signal, and applying the same to the output electrical signal I (expression (7)) to electrically perform synchronous detection. The amplitude of the $\omega m$ components is:

$$2 E_r^2 a + 2 E_r E_1 a \cos \Delta\theta$$

Thus, the phase difference $\Delta\theta$ can be detected.

Either the clockwise or counterclockwise light beam can be amplitude-modulated as in a second embodiment of the invention shown in Fig. 2. In this embodiment, a directional coupler type amplitude modulator 17 is employed.

In the second embodiment, the optical wave-guide 5 is divided into optical wave-guide parts 5c and 5d (Fig. 3), which are adjacent to each other at end portions where electrodes 18c and 18d are provided.

When two optical wave-guides are juxtaposed adjacent to each other on the order of the wavelength, they are coupled to each other through evanescent waves in the intermediate region of low refractive index therebetween. This is known as "evanescent wave coupling". When the two optical wave-guides are equal in optical phase constant, the coupling is maximum, and, ideally, all the energy in one optical wave-guide is transferred to the other optical wave-guide.

The optical phase constant is proportional to the refractive index. The refractive index can be varied by controlling the electric field when the optical wave-guide has an electro-optic effect.

A modulation signal generating IC 19 applies a modulation voltage to the electrode 18c and 18d. The amplitude of the light beam transmitted to the optical wave-guide 5d from the optical wave-guide 5c changes with the modulation angular frequency $\omega m$. That is, in this embodiment, the clockwise beam is subjected to amplitude-modulation.

In the embodiment shown in Fig. 2, no grating is employed. The optical wave-guides 2 and 3 are not perpendicular to each other at the intersection, but they are smoothly connected in such a manner that the directions of the center lines are made to coincide with each other. The optical wave-guides 3 and 4, 4 and 5, and 5 and 2 are connected in the same manner.

In the embodiments shown in Figs. 1 and 2, the S/N ratio is increased by employing amplitude modulation. However, phase modulation may be employed. More specifically, a phase modulator 20 may be provided for one of the clockwise and counterclockwise light beams as shown in Fig. 5.

As the optical wave-guide has an electro-optic effect, the refractive index changes with the electric field. When a voltage is applied across electrodes 21 and 22, the refractive index of that part of the wave-guide which is between the two electrodes is changed, to change the light velocity, whereby phase modulation can be achieved.

The magnitude of phase modulation is:

$$b \sin \omega_m t$$

The counterclockwise beam and the clockwise beam can be expressed as follows:

(counterclockwise beam) $e^{i(\omega t + \Delta\theta/2)}$

(clockwise beam) $e^{i(\omega t - \Delta\theta/2 + b \sin \omega_m t)}$

When square-law detection is effected with a photo-detector, then the output signal includes the following term:

$$J_1(b) \sin \Delta\theta \sin \omega m\, t$$

where $J_1(b)$ is the Bessel function, and $\omega m$ is the modulation frequency.

Therefore, $\sin \Delta\theta$ can be obtained by conducting electrical synchronous detection with a reference signal having the frequency $\omega m$.

In the above-described embodiments, one of the clockwise beam or the counterclockwise beam is amplitude-modulated or phase-modulated.

An optical hererodyne method utilizing optical frequency shift may also be employed in the invention.

Fig. 6 is an explanatory diagram outlining a surface acoustic wave transducer — utilizing an optical frequency shift method.

An interdigital electrode 23 is provided beside an optical wave-guide 5e. A drive circuit applies an AC voltage having a frequency $\omega m$ to the electrode 23. The substrate 1 should exhibit an acousto-optic effect.

When the AC voltage is applied to the interdigital electrode 23, a surface acoustic wave advancing in the direction of the broken line is generated. As the substrate 1 has an acousto-optic effect, it has a region whose refractive index is changed by the surface acoustic wave. Thus, the surface acoustic wave and the light beam interact with each other. The light beam is modulated so that the conservation law of the light beam and surface acoustic wave with respect to wave number and frequency is established.

The light beam in the wave-guide 5e advances to the wave-guide 5f, which is inclined with respect to the wave-guide 5e, and simultaneously the angular frequency is shifted to $(\omega + \omega m)$.

When the frequency is shifted as described above, the light beam in the optical wave-guide 5f can be expressed as follows:

$$e^{i(\omega + \omega m)t}$$

After passing through the optical fiber loop, the two light beams are:

(counterclockwise) $\quad E_1 e^{i(\omega t + \Delta\theta/2)}$

(clockwise) $\quad E_r e^{i(\omega + \omega m)t - \Delta\theta/2}$

As the photo-diode subjects the sum to square-law detection, the output signal of the photo-diode includes the folowing term:

$$E_1 E_r \cos(\omega m \, t - \Delta\theta)$$

This output is electrically compared with the reference signal $(\cos \omega m \, t)$, to obtain the phase difference $\Delta\theta$.

This method is disadvantageous in that the signal processing system is rather intricate; however, it is advantageous in that the operation is scarcely affected by level drift because the output of the photo-detector is an AC signal (having the frequency $\omega m$). Furthermore, the method has merit in that its phase difference detection range is wide.

Thus, according to the invention, an optical fiber gyro is fabricated monolithically by providing the optical wave-guides, the laser diode, the photo-diode and the modulator on a substrate having an electro-optic effect. Therefore, the optical fiber gyro according to the invention has the following merits or effects:

(1) The device is small in size, small in weight and durable against vibration. In the device, adjustment of the optical axis is unnecessary, because the active elements, namely, the laser diode, the photo-diode, the optical wave-guides and the modulator are intergrated on one substrate.

(2) The optical fiber gyro is high in S/N ratio, because a modulator, such as an optical amplitude modulator, an optical phase modulator or a frequency shifter is inserted in the optical path of one of the clockwise and counterclockwise light beams.

(3) The modulation signal generating circuit and the detection signal electrical processing circuit can be monolithically arranged by employing a semiconductor such as GaAs or InP to form a substrate having the electro-optic effect.

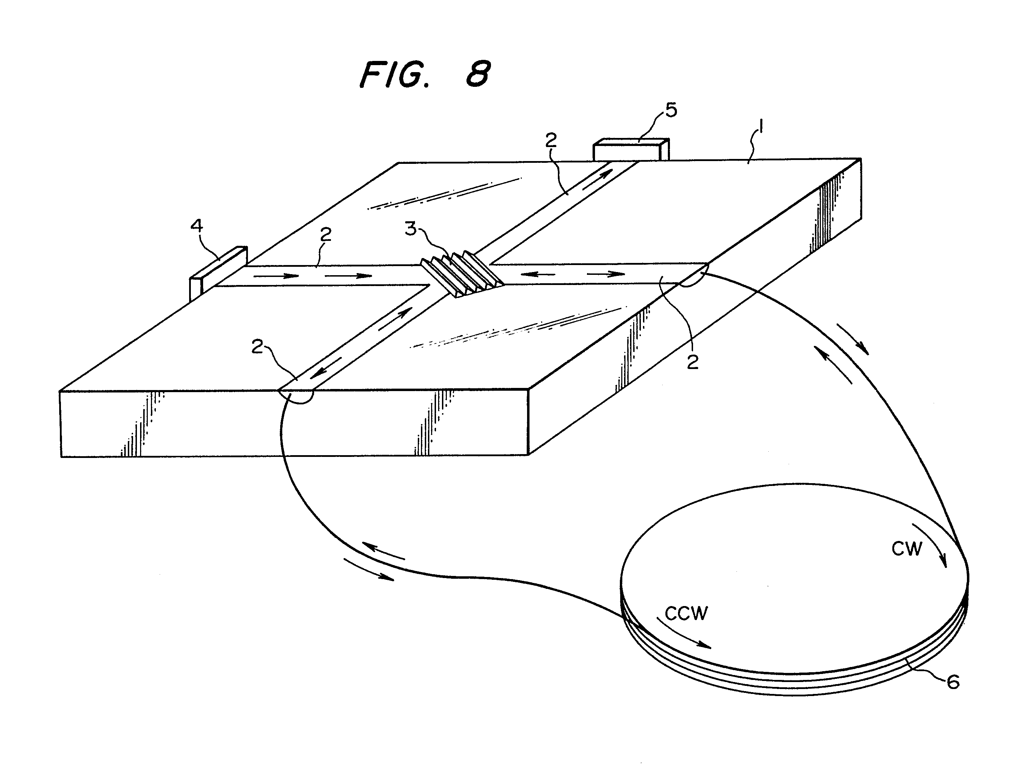

Fig. 8 shows an optical fiber gyro according to another embodiment of the invention.

In this optical fiber gyro, the light branching element is a diffraction grating, and the substrate 61 is made of a material such as $LiNbo_3$ which allows the passage of a laser beam and can form optical wave-guides 62.

The optical wave-guides 62 are provided in the form of a cross (+) on the substrate. In this embodiment, Ti is diffused in a substrate of $LiNbo_3$, to form two straight parts in the substrate which are higher in refractive index than the substrate, thus providing the optical wave-guides.

A diffraction grating 63 is provided at the intersection of the two optical wave-guides, in a manner such that it forms a 45° angle with each of the optical wave-guides 62.

The function of the diffraction grating 63 corresponds to that of the beam splitter in the above-described conventional optical fiber gyro.

The diffraction grating 3 is formed by the following method: Photoresist, which is lower in refractive index than the substrate, is coated on the substrate, and is then subjected to two-beam interference exposure, to form interference fringes arranged at certain intervals. The portions of the photo resist which have been subjected to the exposure, or those portions not subjected to the exposure are removed by developing, to form the diffraction grating,

The two-beam interference technique mentioned above is as follows: A laser beam is divided into two beams, which are changed into parallel beams of larger diameter with the aid of collimator lens. The two light beams thus provided are applied to the photo-sensitve material in a manner such as to form an incident angle $\pm \theta$ with respect to the normal, so that interference fringes are formed on the photo-sensitive material.

A light emitting element 64 and a light receiving element 65 are connected to ends of the crossed optical wave-guides 62, 62, respectively. The light emitting element 65 may be a PIN photo-diode or an avalanche photo-diode. These elements are connected, in the form of a chip, to the ends of the optical wave-guides 62.

Similarly to the conventional optical fiber gyro, an optical fiber loop is fabricated by winding a single mode otical fiber several turns, the two ends of the optical fiber loop being connected to the remaining ends of the optical wave-guides 62.

Instead of the above-described diffraction grating, a directional coupler type light branching element may be employed.

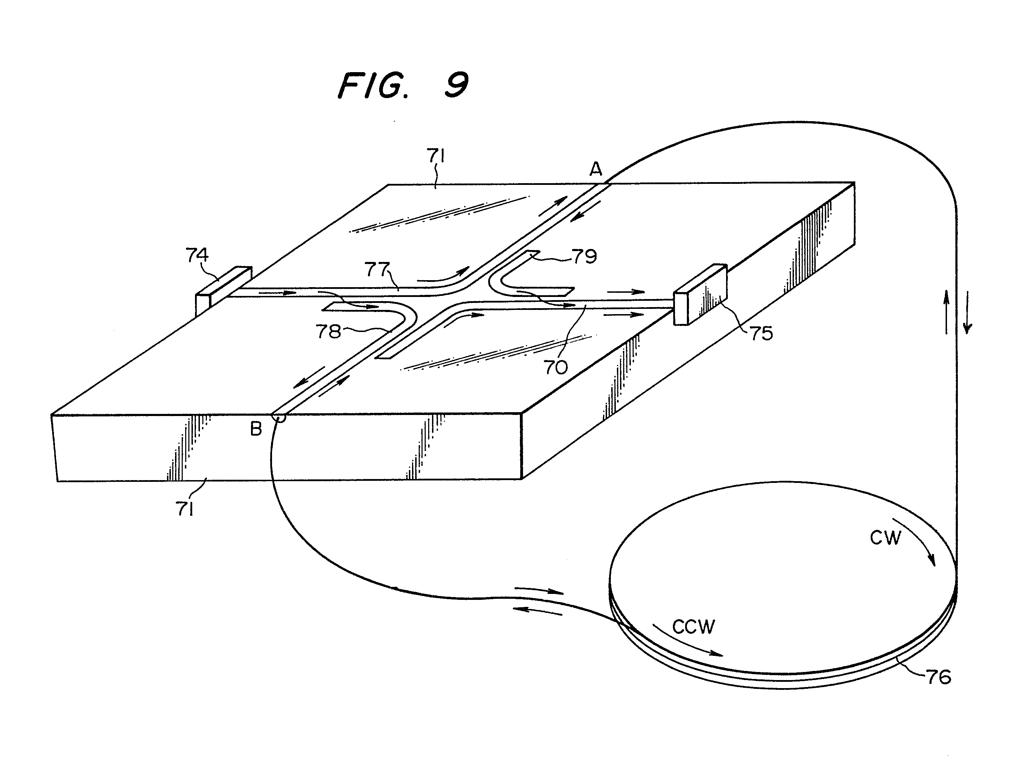

Fig. 9 is a perspective view of an optical fiber gyro according to a further embodiment of the invention, which utilizes such a light branching element.

As shown in Fig. 9, four optical wave-guides 77, 78, 79 and 70 are provided on a substrate 1. Each wave-guide is bent through 90° near the center of the substrate 1. None of the optical wave-guides are crossed. However, pairs of optical wave-guides are adjacent to each other, and a light beam is shifted from one of the optical wave-guides to the other via evanescent waves.

In this embodiment, the optical wave-guide 77 is laid between the light emitting element 74 and the fiber end A. The clockwise (CW) light beam goes through a the optical wave-guide 77 to the optical fiber loop 76.

The optical wave-guide 78 consists of a first part adjacent to the optical wave-guide 77 and a second part extended to the fiber end B. Therefore, the counterclockwise (CCW) beam is transferred from the optical wave-guide 77 to the optical wave-guide 78 through evanescent waves, thus entering the optical fiber loop 76 through the fiber end B.

The CW light beam, after passing through the optical fiber loop, enters the optical wave-guide 78 through the fiber end B. The optical wave-guide 78 is parallel with the optical wave-guide 70 with a small gap therebetween. Therefore, the light beam is shifted from the optical wave-guide 78 to the optical wave-guide 70 through evanescent waves.

The CCW light beam, after passing through the optical fiber loop, is shifted to the optical wave-guides 77, 79 and 70, in the stated order, through evanescent waves.

As is apparent from the above description, directional couplers are formed between the optical wave-guides 77 and 78, 78 and 70, 79 and 70, and 79 and 77, respectively. These four directional couplers serve as light branching elements, thus corresponding to the beam splitter in the conventional optical fiber gyro.

The light branching element may also be a Y-shaped branching path.

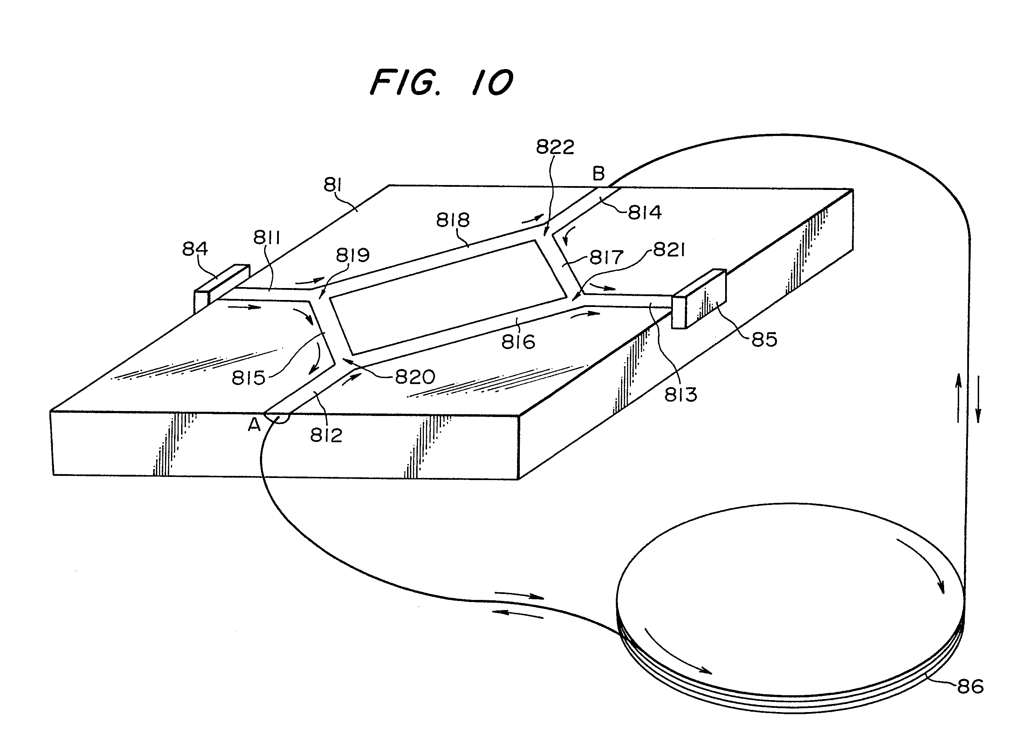

Fig. 10 is a perspective view of an optical fiber gyro according to a further embodiment of the invention, which employs such light branching elements.

As shown in Fig. 10, optical wave-guides 811, 812, 813, 814 extend from the light emitting element 84, fiber end A, light receiving element 85 and fiber end B perpendicularly to the end faces of the substrate, respectively.  Optical wave-guides 815, 816,817 and 818 are formed on the substrate in a manner such that they connect the optical wave-guides 811, 812, 813 and 814 as shown in Fig. 10.

These optical wave-guides      provide   the aforementioned Y-shaped branching paths 819, 820, 821 and 822.

The Y-shaped branching path 819  is provided at the joint of the optical wave-guides 811, 815 and 818.

The laser beam from the light emitting element 4 is divided into      two light beams at the Y-shaped branching path 819.  One of the two light beams goes through the optical wave-guides 815 and 812 to the fiber end A, while the other goes through the wave-guides 818 and 814 to the fiber end B.  The light beams, after passing through the optical fiber loop 86, return through the fiber ends B and A to the optical wave-guides 814 and 812, respectively. Parts of the light  beams, which have been allowed to pass through the optical wave-guides 817 and 816 at the Y-shaped branching paths 22 and 20, respectively, enter the light receiving element 85.

In the above-described embodiment, the light emitting element and the light receiving element are  not integrated in the    substrate; that is, the chips are bonded to the substrate.  However, the light emitting element, the receiving element and the substrate may all be made from one compound semiconductor crystal. That is, they can be provided in monolithic form.

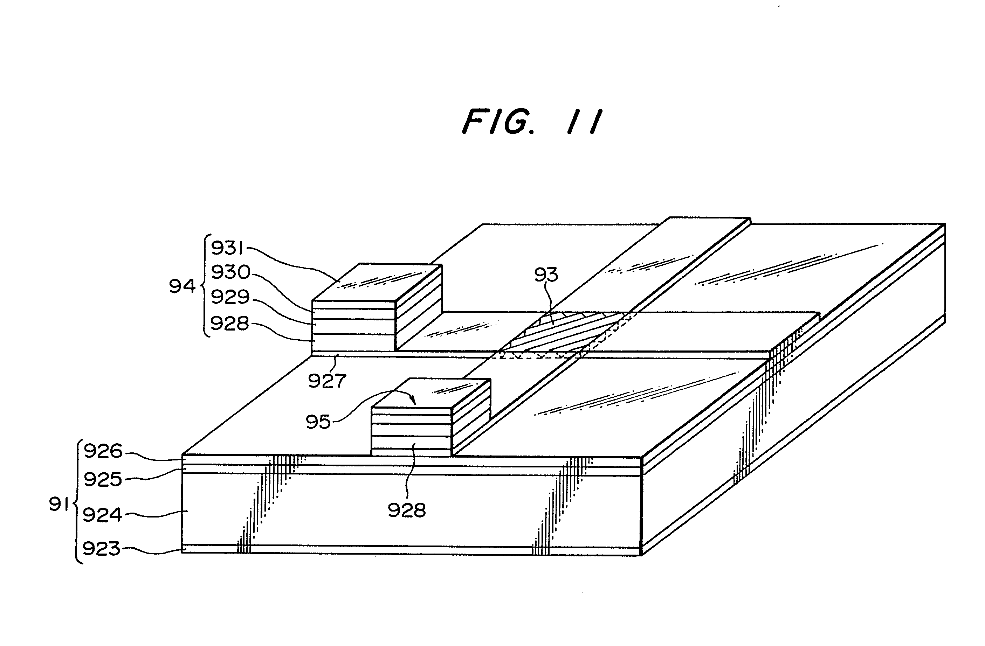

Fig. 11 is a perspective view of an optical fiber gyro according to a fourth embodiment of the invention, which uses a GaAs substrate.

The substrate 91 comprises an electrode 923, an n-GaAs layer 924, an n-$Ga_{0.2}Al_{0.8}As$ layer 925 and an n-GaAs layer 926, an optical waveguide, which are arranged in the stated order from bottom to top.

A light emitting element 94 has the same layer structure as a light receiving element 95.

The light emitting element 94 is a double heterostructure junction laser which comprises an active layer, namely, an n-GaAs layer 928, a p-$Ga_{0.2}Al_{0.8}As$ layer 929, a p-GaAs layer 930 and an electrode 931 which are arranged in the stated order from bottom to top. The laser beam is oscillated from the active (n-GaAs) layer 928, and is transmitted to the optical wave-guide by evanescent coupling.

In the light receiving element 95, the n-GaAs layer 928 is an absorption layer, and coupling with the optical wave-guide is effected through evanescent waves.

As the optical systems are optically integrated, the optical fiber gyro according to the invention is small in size, small in weight, high in reliability and high in stability.

In the optical systems, the number of elements requiring optical axis adjustment is decreased, or it becomes completely unnecessary to adjust the optical axes thereof. Accordingly, the optical fiber gyro can be readily manufactured or assembled.

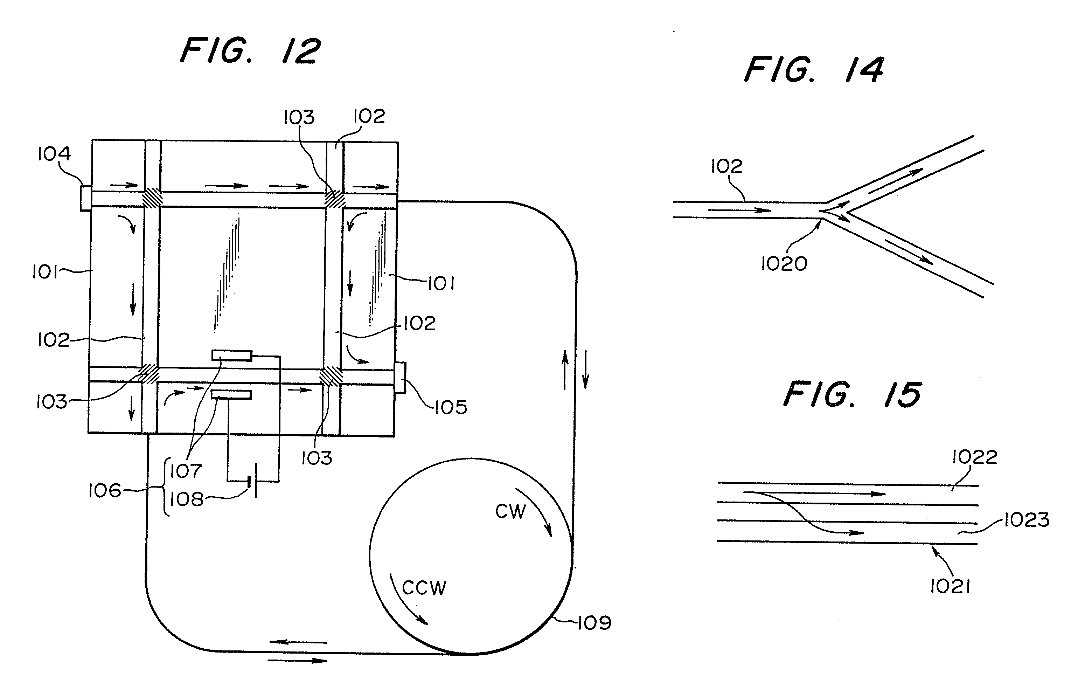

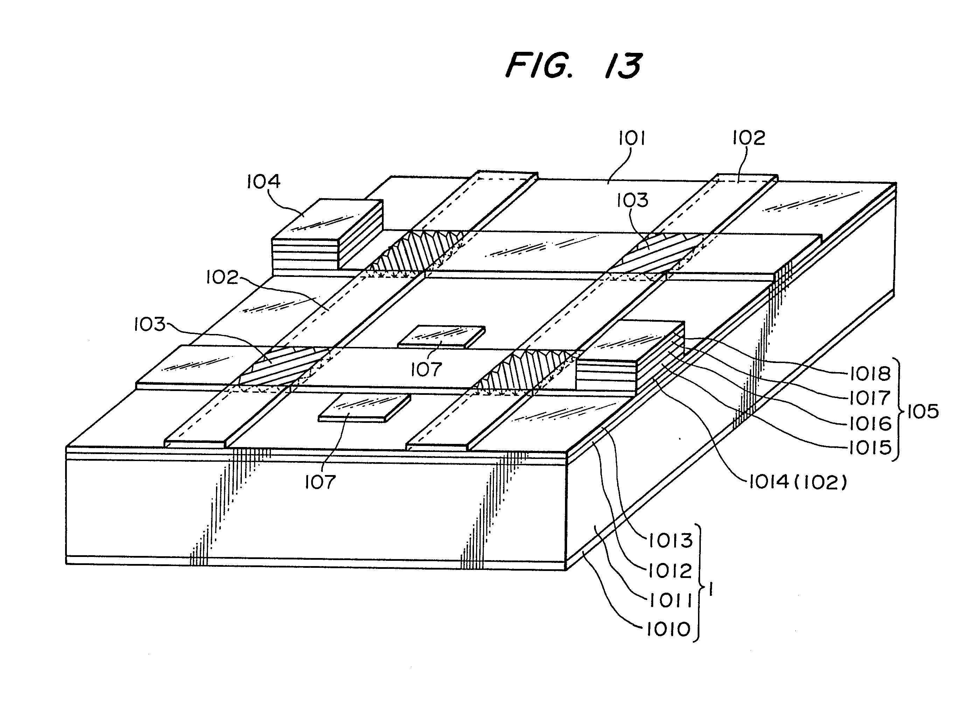

Fig. 12 is a plan view showing another example of an optical fiber gyro according to this invention.

Two parallel optical wave-guides 102 are formed horizontally on a substrate 101 having an electro-optic effect, and two parallel optical wave-guides 102 are formed vertically on the substrate, so that the wave-guides cross at four points.

Four light branching elements 103 are disposed at the intersections of the optical wave-guides 102; that is, at the four corners of the square. The two groups of optical wave-guides 102 are separated from each other. A phase shifter 106 is provided on one of the two groups of optical wave-guides 102.

The material of the substrate is, for instance, crystalline LiNbo$_3$.

The optical wave-guides may be formed by a Ti diffusion method, for instance. More specifically, each optical wave-guide is provided by forming a linear part on the substrate, which is higher in refractive index than the remaining portions.

In this example, diffraction gratings are employed as light branching elements 103. The diffraction gratings may be provided by forming parallel grating lines by mechanical means. However, the diffraction gratings can be more readily formed by photolithography. A photoresist lower in refractive index than the optical wave-guide is applied to the intersections of the optical wave-guides, interference fringes of desired period are formed by two-beam interference exposure, and the photoresist which is not hardened is then washed away. Thus, the diffraction gratings formed of photoresist may be employed as the light branching elements.

The light emitting element 104 is a laser diode or a superluminescent diode in the form of a chip bonded to one end face of the substrate. It goes without saying that a container including the chip may be bonded to the end face of the substrate. In this connection, it is essential that the light emitting element be firmly bonded to the substrate.

The optical fiber gyro further comprises a light receiving element 105 which is, for instance, an ordinary silicon photo-diode. The element 105, which is in the form of a chip, or is put in a suitable container, is bonded to the end of the predetermined optical wave-guide 102. The light receiving element may be a photo-diode of a compound semiconductor such as GaAlAs.

The optical fiber gyro further comprises a phase shifter 106. The phase shifter includes a pair of electrodes 107 arranged on both sides of the separated optical wave-guide 102 in a manner such that they are parallel with the optical wave-guide, and a power source 108 for applying a DC voltage across the electrodes. The power source is provided outside the substrate 101 and is connected through suitable lead wires to the electoodes 107.

The electrodes may, for example, be aluminum plates coated with insulating material.

Upon the application of a DC voltage across the electrodes, a strong electric field is generated in the space between the electrodes. As the substrate has an electro-optic effect, the refractive index changes in proportion to the intensity of the electric field. Each optical wave-guide 102 is formed by a Ti diffusion method, so that it is larger in refractive index than other regions of the substrate, and confine light therein, as described before. As the refractive index is changed by the electric field, the velocity of the light passing through the optical wave-guide is changed.

Thus, the phase can be shifted as desired by controlling the applied voltage.

The optical fiber loop 109 is fabricated by winding a single mode optical fiber several turns.  The two ends of the optical fiber loop are connected to the end faces of the predetermined optical wave-guides 102 on the substrate.  Rod lenses may be employed so that the light beams in the optical wave-guides are concentrated and then applied to the optical fiber loop 109.

The substrate may be of any material which provides an electro-optic effect.  For instance, the material of the substrate may be a dielectric such as $LiNbO_3$ or $Bi_{12}SiO_{20}$, or a compound semiconductor such as GaAs or InP.

In the case where the substrate is made of a compound semiconductor, all of the optical  elements can be formed on one and the same substrate as described above; that is, the optical elements can be provided in monolithic form.

Fig. 13 shows another example of the optical fiber gyro according to the invention.  In the example, the substrate is of n-type GaAs.

Similarly to the above-described example, the light emitting element 104 is a GaAs    laser diode;

however, it should be noted that the element 104 is provided on an optical wave-guide on the substrate.

The substrate comprises an electrode 1010, a thick n-GaAs layer 1011, an $n-Ga_{0.2}Al_{0.8}As$ layer 1012 and an n-GaAs optical wave-guide layer 1013 which are laid one on another in the stated order.

The light receiving element 105 is a GaAs photo-diode, instead of a silicon photo-diode.

The Clad layer 102(1014) is an $n-Ga_{0.2}Al_{0.8}As$ layer. The light receiving element 105 on the clad layer 102 comprises an n-GaAs layer (absorbing layer) 1015, a $p-Ga_{0.2}Al_{0.8}As$ layer 1016, a p-GaAs layer 1016 and an electrode.

As the light receiving element corresponds in structure to the light emitting element, all of the optical system can be provided in monolithic form by photolithography.

In the example shown in Figs. 12 and 13, the light branching elements 103 are diffraction gratings; however, a Y-shaped branching system 1020 as shown in Fig. 14 may be employed.

Furthermore, an evanescent coupling system 1021 as shown in Fig. 15 may be employed. When two optical wave-guides 1022 and 1023 are adjacent to each other, an evanescent wave may be transmitted from one wave-guide to the other, whereby the energy is transmitted. Thus, the branching element may be formed by employing an evanescent coupling system.

As the optical systems are integrated on one substrate, the optical fiber gyro is small in size, small in weight, high in reliability and excellent in stability.

It is completely or substantially unnecessary to adjust the optical axes of the optical systems. Accordingly, the optical fiber gyro of the invention can be manufactured and assembled with ease.

The amount of phase shift can be continuously changed by controlling the applied voltage; that is, it can be readily adjusted, Thus, the optical fiber gyro of the invention is high in sensitivity in a low angular speed range.

The optical fiber gyro of the invention may be installed on automobiles, ships and airplanes, to measure rotational angular speeds or rotational displacements.

Furthermore, the optical fiber gyro may be installed on a moving object such as a robot. In this case, it is used as a position sensor for detecting the position of the moving object.

WHAT IS CLAIMED IS:

1.      An optical fiber gyro, comprising:

        a substrate, said substrate including optical
wave-guides, light branching means, a light emitting element
and a light receiving element; and

        an optical fiber loop, both ends of which are
connected to ends of said optical wave-guides, respectively.

2.      An optical fiber gyro as claimed in claim 1,
said light branching means comprising a diffraction grating.

3.      An optical fiber gyro as claimed in claim 1,
said light branching means comprising a Y-shaped branching
element.

4.      An optical fiber gyro as claimed in claim 1,
said light branching means comprising a directional coupler
type branching element.

5.      An optical fiber gyro as claimed in claim 1,
said light emitting element and light receiving element
being bonded to said substrate.

6.      An optical fiber gyro as claimed in claim 1,
said substrate comprising a compound semiconductor, said
light emitting element, said light receiving element,
said optical wave-guides and said light branching means
being monolithically formed on said substrate.

7.      An optical fiber gyro as claimed in claim 1,
said optical wave-guides comprising higher refraction index regions of said substrate.

8.        An optical fiber gyro as claimed in claim 7,
said higher refraction index regions comprising diffusion
regions.

9.        An optical fiber gyro as claimed in claim 2,
said diffraction grating comprising an interference pattern
formed of a photoresist.

10.       An optical fiber gyro as claimed in claim 1,
said light emitting element comprising a semiconductor
laser.

11.       An optical fiber gyro as claimed in claim 1,
said light emitting element comprising a superluminescent
diode.

12.       An optical fiber gyro as claimed in claim 1,
said light receiving element comprising a photodiode.

13.       An optical fiber gyro, comprising:

an optical fiber  loop comprising an optical
fiber wound several turns;

a substrate, optical wave-guides for a clockwise
light beam and optical wave-guides for a counterclockwise
light beam formed on said substrate;

laser means for applying the same laser beam
to said clockwise light beam optical wave-guides and
said counterclockwise light beam optical wave-guides
on said substrate;

a light receiving element provided on one of said optical wave-guides, for simultaneously receiving said clockwise light beam and said counterclockwise light beam after having passed through said optical fiber loop; and

a modulator provided on said substrate, for modulating one of said clockwise and counterclockwise light beams.

14. An optical fiber gyro as claimed in claim 13, a part of an optical wave-guide being branched into optical wave-guide branches to form a Mach-Zehnder type interferometer, electrodes provided for said optical wave-guide branches, and modulation signal generating means provided on said substrate for applying a modulating voltage to said optical wave-guide branches, to amplitude-modulate one of said light beams.

15. An optical fiber gyro as claimed in claim 13, said substrate having an electro-optic effect, an optical directional coupler being formed at a part of an optical wave-guide, and modulation signal generating means for applying a modulating electric field to said optical wave-guide at said optical directional coupler, to amplitude-modulate one of said two light beams.

16. An optical fiber gyro as claimed in claim 13, said substrate having an electro-optic effect, electrodes provided at a linear portion of an optical wave-guide, and modulation signal generating means for applying a modulating electric field to said electrodes, to phase modulate one of said light beams.

17. An optical fiber gyro as claimed in claim 13, said substrate having an acousto-optic effect, a comb-shaped electrode and a drive circuit therefor being provided on said substrate for generating a surface elastic wave, and a modulator for shifting an optical frequency of one of said light beams.

18. An optical fiber gyro as claimed in claim 13, including grating means provided at intersections of said optical wave-guides.

19. An optical fiber gyro as claimed in claim 13, said laser means comprising a laser diode bonded to an end of an optical wave guide.

20. An optical fiber gyro as claimed in claim 13, said light receiving element comprising a photodiode bonded to an end of an optical wave-guide for subjecting said received light beams to square-law detection.

21. An optical fiber gyro as claimed in claim 13, one of said optical wave-guidesbeing composed of two juxtaposed wave-guides coupled via evanescent waves.

22. An optical fiber gyro as claimed in claim 13, including means for smoothly connecting said optical wave-guides at intersections thereof.

23.      An optical fiber gyro, comprising; a substrate; optical wave-guides, light branching means, a light emitting element, a light receiving element and a phase shifter forming an optical system of said optical fiber gyro formed on said substrate; said substrate having an electro-optic effect, said phase shifter comprising means for applying an electric field across one of said optical wave-guides.

24.      An optical fiber gyro as claimed in claim 23, said substrate comprising a compound semiconductor GaAs single crystal, a GaAlAs laser diode and a GaAlAs photo-diode being provided in monolithic form on said substrate as said light emitting and receiving elements, respectively.

25.      An optical fiber gyro as claimed in claim 23, said field applying means comprising electrodes arranged on either side of a portion of one of said optical wave-guides, and means for applying a voltage across said electrodes.

26.      An optical fiber gyro as claimed in claim 23, said light branching means comprising a diffraction grating.

27.      An optical fiber gyro as claimed in claim 26, said grating being formed of photoresist material.

28.      An optical fiber gyro as claimed in claim 23, said light branching means comprising a Y-shaped branching element.

29.     An optical fiber gyro as claimed in claim 23, said light branching means comprising a directional coupler type branching element.

30.     An optical fiber gyro as claimed in claim 24, said optical wave-guides comprising Ti diffusion regions of said substrate.

1/10

0092831

FIG. 1

FIG. 2

## FIG. 3

## FIG. 4

## FIG. 5

## FIG. 6

## FIG. 7

# FIG. 7a

# FIG. 8

0092831

FIG. 9

# FIG. 10

FIG. 11

FIG. 12

FIG. 14

FIG. 15

FIG. 13